# EUROPÄISCHE PATENTSCHRIFT

(11) **EP 3 899 316 B1**
(45) Veröffentlichungstag und Bekanntmachung des Hinweises auf die Patenterteilung: **25.01.2023**
(21) Anmeldenummer: 19832628.2
(22) Anmeldetag: 18.12.2019
(51) Int. Cl.: F16F 15/121, F16F 15/133, F16F 15/16, F16F 15/123, F16F 15/134

(54) **DREHSCHWINGUNGSDÄMPFUNGSANORDNUNG FÜR DEN ANTRIEBSSTRANG EINES FAHRZEUGS**
TORSIONAL VIBRATION DAMPER ASSEMBLY FOR THE POWERTRAIN OF A VEHICLE
ARRANGEMENT D'AMORTISSEMENT DE VIBRATIONS DE TORSION POUR LA CHAÎNE CINÉMATIQUE D'UN VÉHICULE

(30) Priorität: 19.12.2018 DE 102018222306
(43) Veröffentlichungstag der Anmeldung: 27.10.2021
(73) Patentinhaber: ZF Friedrichshafen AG, 88046 Friedrichshafen (DE)
(72) Erfinder: GROSSGEBAUER, Uwe, 97250 Erlabrunn (DE); LORENZ, Daniel, 97688 Bad Kissingen (DE); HOFFELNER, Ingrid, 97478 Knetzgau (DE); CARLSON, Cora, 97456 Dittelbrunn (DE)
(86) Internationale Anmeldenummer: PCT/EP2019/085839
(87) Internationale Veröffentlichungsnummer: WO 2020/127415

(56) Entgegenhaltungen:
- WO-A1-2017/137382
- DE-A1-102016 225 865

## Beschreibung

Die vorliegende Erfindung betrifft eine Drehschwingungsdämpfungsanordnung für den Antriebsstrang eines Fahrzeugs, umfassend einen zur Drehung um eine Drehachse anzutreibenden Eingangsbereich und einen Ausgangsbereich, wobei zwischen dem Eingangsbereich und dem Ausgangsbereich ein erster Drehmomentübertragungsweg und parallel dazu ein zweiter Drehmomentübertragungsweg sowie eine Koppelanordnung zur Überlagerung der über die Drehmomentübertragungswege geleiteten Drehmomente vorgesehen sind, wobei im ersten Drehmomentübertragungsweg eine Phasenschieberanordnung zur Erzeugung einer Phasenverschiebung von über den ersten Drehmomentübertragungsweg geleiteten Drehungleichförmigkeiten bezüglich über den zweiten Drehmomentübertragungsweg geleiteten Drehungleichförmigkeiten vorgesehen ist.

Aus der deutschen Patentanmeldung DE 10 2011 007 118 A1 ist eine Drehschwingungsdämpfungsanordnung bekannt, welche das in einen Eingangsbereich beispielsweise durch eine Kurbelwelle einer Brennkraftmaschine eingeleitete Drehmoment in einen über einen ersten Drehmomentübertragungsweg übertragenen Drehmomentanteil und einen über einen zweiten Drehmomentübertragungsweg geleiteten Drehmomentanteil aufteilt. Bei dieser Drehmomentaufteilung wird nicht nur ein statisches Drehmoment aufgeteilt, sondern auch die im zu übertragenen Drehmoment enthaltenen Schwingungen bzw. Drehungleichförmigkeiten, beispielsweise generiert durch die periodisch auftretenden Zündungen in einer Brennkraftmaschine, werden anteilig auf die beiden Drehmomentübertragungswege aufgeteilt. Die Koppelanordnung führt hier die beiden Drehmomentübertragungswege wieder zusammen und leitet das zusammengeführte Gesamtdrehmoment in den Ausgangsbereich, beispielsweise eine Reibungskupplung oder dergleichen, ein.

In zumindest einem der Drehmomentübertragungswege ist eine Phasenschieberanordnung vorgesehen, welche nach Art eines Schwingungsdämpfers, also mit einem Primärelement und einem durch die Kompressibilität einer Federanordnung bezüglich dieser drehbaren Zwischenelement aufgebaut ist. Insbesondere dann, wenn dieses Schwingungssystem in einen überkritischen Zustand übergeht, also mit Schwingungen angeregt wird, die über der Resonanzfrequenz des Schwingungssystems liegen, tritt eine Phasenverschiebung von bis zu 180° auf. Dies bedeutet, dass bei maximaler Phasenverschiebung die vom Schwingungssystem abgegebenen Schwingungsanteile bezüglich der vom Schwingungssystem aufgenommenen Schwingungsanteile um 180° phasenverschoben sind. Da die über den anderen Drehmomentübertragungsweg geleiteten Schwingungsanteile keine oder ggf. eine andere Phasenverschiebung erfahren, können die in den zusammengeführten Drehmomentanteilen enthaltenen und bezüglich einander dann phasenverschobenen Schwingungsanteile einander destruktiv überlagert werden, so dass im Idealfall das in den Ausgangsbereich eingeleitete Gesamtdrehmoment ein im Wesentlichen keine Schwingungsanteile enthaltenes statisches Drehmoment ist. Dabei ist die Koppelanordnung als ein Planetengetriebe ausgeführt.

Aus der DE 10 2011 086 982 A1 ist eine Drehschwingungsdämpfungsanordnung wie gerade beschrieben bekannt, jedoch ist hier die Koppelanordnung als ein Hebelgetriebe ausgeführt.

Auch ist mit der DE 10 2016 225 865 A1 eine Drehschwingungsdämpfungsanordnung wie gerade beschrieben offenbart, jedoch ist hier als Koppelanordnung ein Fluidgetriebe vorgesehen. Dabei zeigen sich bei der Verwendung eines Fluidgetriebes als Koppelanordnung fliehkraftbedingte Probleme auf, die zu einer Übersetzungsänderung bedingt durch die auf das Wirkmedium, bzw. Hydraulikflüssigkeit wirkende Fliehkraft ausgelöst wird.

Es ist die Aufgabe der vorliegenden Erfindung, eine Drehschwingungsdämpfungsanordnung mit einem Fluidgetriebe als Koppelanordnung vorzusehen, welche bei einfachem Aufbau ein verbessertes Schwingungsdämpfungsverhalten auch über Drehzahl aufweist.

Erfindungsgemäß wird diese Aufgabe gelöst durch eine Drehschwingungsdämpfungsanordnung für einen Antriebsstrang eines Fahrzeugs, umfassend einen zur Drehung um eine Drehachse (A) anzutreibenden Eingangsbereich und einen Ausgangsbereich, wobei zwischen dem Eingangsbereich und dem Ausgangsbereich zueinander parallel ein erster Drehmomentübertragungsweg zur Übertragung eines ersten Drehmomentanteils und ein zweiter Drehmomentübertragungsweg zur Übertragung eines zweiten Drehmomentanteils eines zwischen dem Eingangsbereich und dem Ausgangsbereich zu übertragenden Gesamtdrehmomentes vorgesehen sind, eine Phasenschieberanordnung wenigstens im ersten Drehmomentübertragungsweg, zur Erzeugung einer Phasenverschiebung von über den ersten Drehmomentübertragungsweg geleiteten Drehungleichförmigkeiten bezüglich über den zweiten Drehmomentübertragungsweg geleiteten Drehungleichförmigkeiten, wobei die Phasenschieberanordnung ein Schwingungssystem mit einem Primärelement und einem gegen die Rückstellwirkung einer Dämpferelementanordnung bezüglich des Primärelements um die Drehachse (A) drehbaren Zwischenmasse umfasst, eine Koppelanordnung zur Zusammenführung des über den ersten Drehmomentübertragungsweg übertragenen ersten Drehmomentanteils und des über den zweiten Drehmomentübertragungsweg übertragenen zweiten Drehmomentanteils und zur Weiterleitung des zusammengeführten Drehmoments an den Ausgangsbereich, wobei die Koppelanordnung ein erstes Eingangselement, verbunden mit dem ersten Drehmomentübertragungsweg, ein zweites Eingangselement, verbunden mit dem zweiten Drehmomentübertragungsweg und ein Ausgangselement, verbunden mit dem Ausgangsbereich umfasst, wobei die Koppelanordnung als eine Fluidgetriebeanordnung ausgeführt ist, wobei die Fluidgetriebeanordnung ein erstes Zylinderpaar und ein zweites Zylinderpaar umfasst, wobei das erste Zylinderpaar zu dem zweiten Zylinderpaar wechselseitig ausgeführt ist. Dabei ist hier mit dem wechselseitigen Verbau gemeint, dass das erste Zylinderpaar zu dem zweiten Zylinderpaar symmetrisch zu einer virtuellen Ebene E angeordnet ist, wodurch unter Drehzahl / Fliehkraft entstehende Druckunterschiede im jeweiligen Zylinderpaar gegeneinander ausgeglichen werden können und dadurch eine statische Übersetzungsänderung vermieden wird.

Weiter kann die Aufgabe gelöst werden durch eine Drehschwingungsdämpfungsanordnung für einen Antriebsstrang eines Fahrzeugs, umfassend einen zur Drehung um eine Drehachse (A) anzutreibenden Eingangsbereich und einen Ausgangsbereich, wobei zwischen dem Eingangsbereich und dem Ausgangsbereich zueinander parallel ein erster Drehmomentübertragungsweg zur Übertragung eines ersten Drehmomentanteils und ein zweiter Drehmomentübertragungsweg zur Übertragung eines zweiten Drehmomentanteils eines zwischen dem Eingangsbereich und dem Ausgangsbereich zu übertragenden Gesamtdrehmomentes vorgesehen sind, eine Phasenschieberanordnung wenigstens im ersten Drehmomentübertragungsweg, zur Erzeugung einer Phasenverschiebung von über den ersten Drehmomentübertragungsweg geleiteten Drehungleichförmigkeiten bezüglich über den zweiten Drehmomentübertragungsweg geleiteten Drehungleichförmigkeiten, wobei die Phasenschieberanordnung ein Schwingungssystem mit einem Primärelement und einem gegen die Rückstellwirkung einer Dämpferelementanordnung bezüglich des Primärelements um die Drehachse (A) drehbaren Zwischenmasse umfasst, eine Koppelanordnung zur Zusammenführung des über den ersten Drehmomentübertragungsweg übertragenen ersten Drehmomentanteils und des über den zweiten Drehmomentübertragungsweg übertragenen zweiten Drehmomentanteils und zur Weiterleitung des zusammengeführten Drehmoments an den Ausgangsbereich, wobei die Koppelanordnung ein erstes Eingangselement, verbunden mit dem ersten Drehmomentübertragungsweg, ein zweites Eingangselement, verbunden mit dem zweiten Drehmomentübertragungsweg und ein Ausgangselement, verbunden mit dem Ausgangsbereich umfasst, wobei die Koppelanordnung als eine Fluidgetriebeanordnung ausgeführt ist, wobei das erste Zylinderpaar zu dem zweiten Zylinderpaar gleichseitig ausgeführt ist und wobei die Arbeitsräume des ersten und zweiten Zylinderpaares je einen Druckspeicher oder einen gemeinsamen Druckspeicher aufweisen und wobei in Wirkrichtung vor dem jeweiligen Druckspeicher ein Rückschlagventil vorgesehen ist.

Dabei kann es weiter vorgesehen sein, dass das erste Zylinderpaar zumindest ein erstes Kolbenpaar, ein erstes Gehäuseelement und ein Wirkmedium umfasst und dass das zweite Zylinderpaar zumindest ein zweites Kolbenpaar ein zweites Gehäuseelement und ein Wirkmedium umfasst.

Auch kann das erste Kolbenpaar einen ersten Kolben und einen zweiten Kolben umfassen, wobei das erste Gehäuseelement einen ersten Zylinder und einen zweiten Zylinder umfasst, wobei der erste Zylinder und der zweite Zylinder mittels einer Verbindungsöffnung miteinander verbunden sind und wobei das zweite Kolbenpaar einen ersten Kolben und einen zweiten Kolben umfasst, wobei das zweite Gehäuseelement einen ersten Zylinder und einen zweiten Zylinder umfasst, wobei der erste Zylinder und der zweite Zylinder mittels einer Verbindungsöffnung miteinander verbunden sind.

Weiter kann im ersten Zylinderpaar der erste Kolben in dem ersten Zylinder und der zweite Kolben in dem zweiten Zylinder verschiebbar angeordnet sind, wobei die beiden Kolben mittels des Wirkmediums in Wirkverbindung stehen und einen ersten Arbeitsraum bilden und wobei im zweiten Zylinderpaar der erste Kolben in dem ersten Zylinder und der zweite Kolben in dem zweiten Zylinder verschiebbar angeordnet sind, wobei die beiden Kolben mittels des Wirkmediums in Wirkverbindung stehen und einen ersten Arbeitsraum bilden.

Auch kann der erste Kolben des ersten Zylinderpaares und der ersten Kolben des zweiten Zylinderpaares mit dem ersten Eingangselement der Koppelanordnung verbunden sind und dass der der zweite Kolben des ersten Zylinderpaares und der zweite Kolben des zweiten Zylinderpaares mit dem zweiten Eingangselement der Koppelanordnung verbunden sind und wobei das erste und das zweite Gehäuseelement mit dem Ausgangselement verbunden ist.

Weiter kann bei einer relativen Positionsänderung von einem der beiden Kolben des ersten Zylinderpaares zu dem Gehäuseelement der andere der beiden Kolben seine Position gegenläufig verändert und wobei der erste Kolben des ersten Zylinderpaares mit dem ersten Kolben des zweiten Zylinderpaares fest verbunden ist und wobei der zweite Kolben des ersten Zylinderpaares mit dem zweiten Kolben des zweiten Zylinderpaares fest verbunden ist.

Auch kann ein Durchmesser d1 des jeweils ersten Kolbens jedes Zylinderpaares größer oder gleich oder kleiner als ein Durchmesser d2 des jeweils zweiten Kolbens ist.

Weiter kann das erste und das zweite Zylinderpaar einen gekrümmten Verlauf oder einen geraden Verlauf aufweisen.

Weiter kann das erste Zylinderpaar und das zweite Zylinderpaar jeweils eine zweite Verbindungsöffnung vorsehen, wobei die zweiten Verbindungsöffnungen zu den jeweils ersten Verbindungsöffnungen in Reihe vorgesehen sind, so dass jeweils ein zweiter Arbeitsraum gebildet wird, der jeweils mit einem Wirkmedium gefüllt ist, so dass jeweils ein Zylinderpaar doppelwirkend ausgeführt ist.

Auch das Wirkmedium ein inkompressibles Medium ist, wobei das inkompressible Medium als ein Fluid, beispielsweise eine Hydraulikflüssigkeit ausgeführt sein kann.

Auch kann jeweils an dem ersten Arbeitsraum des ersten bzw. zweiten Zylinderpaares ein Druckspeicher und in Wirkrichtung vor dem Druckspeicher jeweils ein Rückschlagventil vorgesehen sein.

Auch kann jeweils an dem zweiten Arbeitsraum des ersten bzw. zweiten Zylinderpaares ein Druckspeicher und in Wirkrichtung vor dem Druckspeicher jeweils ein Rückschlagventil vorgesehen sein.

Auch kann der erste Arbeitsraum des ersten Zylinderpaares und der ersten Arbeitsraum des zweiten Zylinderpaares einen gemeinsamen Druckspeicher vorsehen und in Wirkrichtung vor dem Druckspeicher ein Rückschlagventil vorgesehen sein.

Auch kann es vorgesehen sein, dass der zweite Arbeitsraum des ersten Zylinderpaares und der zweite Arbeitsraum des zweiten Zylinderpaares einen gemeinsamen Druckspeicher vorsehen und in Wirkrichtung vor dem Druckspeicher ein Rückschlagventil vorgesehen ist.

Weiter kann es ausgeführt sein, dass der erste und der zweite Arbeitsraum des ersten Zylinderpaares und der erste und zweite Arbeitsraum des zweiten Zylinderpaares einen gemeinsamen Druckspeicher vorsehen und in Wirkrichtung vor dem Druckspeicher ein Rückschlagventil vorgesehen ist.

Weiter können in Umfangsrichtung um die Drehachse (A) zwei oder mehrere Fluidgetriebeanordnungen gleichmäßig oder ungleichmäßig verteilt angeordnet sein.

Auch können das erste Zylinderpaar und das zweite Zylinderpaar auf gleichen Radien oder auf unterschiedlichen Radien um die Drehachse A vorgesehen sein.

Die vorliegende Erfindung wird nachfolgend mit Bezug auf die beiliegenden Figuren detailliert beschrieben. Es zeigt:
- Fig. 1: eine Schnittansicht einer erfindungsgemäßen Drehschwingungsdämpfungsanordnung mit einer Fluidgetriebeanordnung als Koppelanordnung
- Fig. 2-11: weitere Ausführungsformen
- Fig. 12: eine Fluidsteifigkeitskennlinie in Abhängigkeit von einem Vordruck.
- Fig. 13-15: weitere Ausführungsformen

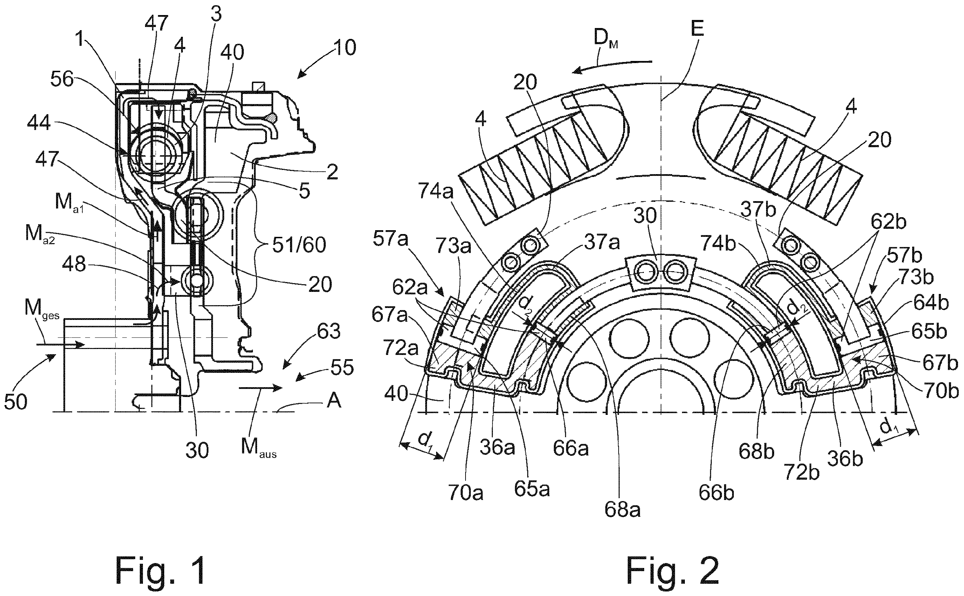

Mit Bezug auf die Figur 1 und 2 wird nachfolgend eine erste erfindungsgemäße Ausgestaltungsform einer allgemein mit 10 bezeichneten Drehschwingungsdämpfungsanordnung beschrieben, welche nach dem Prinzip der Leistungs- bzw. Drehmomentaufzweigung arbeitet. Die Drehschwingungsdämpfungsanordnung 10 kann in einem Antriebsstrang, beispielsweise eines Fahrzeugs zwischen einem Antriebsaggregat und dem folgenden Teil des Antriebsstrangs, beispielsweise ein Getriebe, eine Reibungskupplung, einem hydrodynamischen Drehmomentwandler oder dergleichen, angeordnet werden.

Die in der Figur 1 und 2 dargestellte Drehschwingungsdämpfungsanordnung 10 umfasst einen allgemein mit 50 bezeichneten Eingangsbereich. Dieser Eingangsbereich 50 kann beispielsweise durch Verschraubung an eine Kurbelwelle, nicht dargestellt, eines Antriebsaggregates angebunden werden. Im Eingangsbereich 50 zweigt sich das von dem Antriebsaggregat aufgenommene Drehmoment in einen ersten Drehmomentübertragungsweg 47 und einen zweiten Drehmomentübertragungsweg 48 auf. Im Bereich einer allgemein mit 51 bezeichneten Koppelanordnung werden die über die beiden Drehmomentübertragungswege 47, 48 geleiteten Drehmomentanteile Ma1 und Ma2 wieder zu einem Ausgangsdrehmoment Maus zusammengeführt und dann zu einem Ausgangsbereich 55, der beispielsweise wie hier durch ein Getriebe 63 ausgeführt sein kann, weitergeleitet.

In dem ersten Drehmomentübertragungsweg 47 ist ein allgemein mit 56 bezeichnetes Schwingungssystem integriert. Das Schwingungssystem 56 ist als Phasenschieberanordnung 44 wirksam und umfasst eine beispielsweise an das Antriebsaggregat anzubindendes Primärelement 1, sowie eine das Drehmoment weiterleitendes Sekundärelement 2. Dabei ist das Primärelement 1 gegen eine Dämpferelementanordnung 4 zu der Zwischenmasse 5 relativ verdrehbar.

Aus der vorangehenden Beschreibung wird erkennbar, dass das Schwingungssystem 56 nach Art eines Torsionsschwingungsdämpfers mit einem, wie hier dargestellt, oder mehreren Federsätzen 4 ausgebildet ist. Durch eine Auswahl der Massen des Primärelements 1 und der Zwischenmasse 5, sowie auch der Steifigkeiten des oder der Federsätze 4 wird es möglich, eine Resonanzfrequenz des Schwingungssystems 56 in einen gewünschten Bereich zu legen, um eine günstige Phasenverschiebung von Drehschwingungen im ersten Drehmomentübertragungsweg 47 zu den Drehschwingungen in dem zweiten Drehmomentübertragungsweg 48 zu erreichen. Um dies zu erreichen, wird der erste Drehmomentübertragungsweg 47 überkritisch betrieben. Gleichzeitig verringert sich auch die Schwingungsamplitude im phasenverschobenen Drehmomentübertragungsweg 47 nach dem Federsatz 4. Im zweiten Drehmomentübertragungsweg 48 soll die Phasenlage der Drehschwingungen möglichst beibehalten werden. Um dies zu erreichen wird dieser Weg möglichst steif und mit geringer Massenträgheit ausgeführt. Die Koppelanordnung 51 der Drehschwingungsdämpfungsanordnung 10 führt die beiden Drehmomentanteile Ma1 und Ma2 wieder zusammen. Dies erfolgt dadurch, dass die beiden Drehmomentanteile Ma1 und Ma2 und damit auch die Drehschwingungsanteile überlagert werden in der Form, dass in einem optimalen Fall bei einer 180 ° Phasenverschiebung der beiden Drehschwingungsanteile und bei gleicher Amplitude der beiden Drehschwingungsanteile in den beiden Drehmomentübertragungswegen 47, 48 nach der Überlagerung in der Koppelanordnung 51 ein Drehmoment Maus ohne Drehschwingungsanteile an den Ausgangsbereich 55 weitergeleitet wird.

Dabei ist eine Übersetzung der Koppelanordnung, eine Federkennlinie und eine Trägheit der Zwischenmasse 5 sind so zu wählen, dass die Amplitudenverhältnisse beider Drehmomentwege 47; 48 gleich sind und sich somit die Schwinganteile gegenseitig auslöschen. Durch die Übersetzung wird auch bestimmt, wie viel Moment über den phasenverschobenen Drehmomentübertragungsweg 47 und somit über den Federsatz 4 geleitet wird, und wie viel Drehmoment über den direkten Drehmomentübertragungsweg 48 verläuft.

Dabei ist hier die Koppelanordnung 51 als eine Fluidgetriebeanordnung 60 ausgeführt. Dabei umfasst das Fluidgetriebeanordnung 60 ein erstes Zylinderpaar 57a und ein zweites Zylinderpaar 57b, wobei die beiden Zylinderpaare 57a, b wechselseitig angeordnet sind. Dabei meint hier wechselseitig, dass das erste Zylinderpaar und das zweite Zylinderpaar gleich ausgeführt sind und symmetrisch zu einer virtuellen Ebene E angeordnet sind. Durch diese Ausführungsform des wechselseitigen Verbaus wird der unter Drehzahl entstehende Druckunterschied in den jeweiligen Zylinderpaaren wieder ausgeglichen und dadurch eine statische Übersetzungsänderung und damit eine Änderung des statischen Verdrehwinkel des Federsatzes bei gleichbleibendem mittleren Motormoment und unterschiedlicher Drehzahl vermieden.

Dabei ist hier weiter zu bemerken, dass die Fig. 2 hier einen unbelasteten Zustand der Drehschwingungsdämpfungsanordnung zeigt, also einen Zustand, in dem kein Motordrehmoment übertragen wird. Dabei ist hier die Motordrehrichtung Dm gegen den Uhrzeigersinn dargestellt. Weiter ist in der Fig. 2 gut der Aufbau der beiden Zylinderpaare 57a, 57b zu erkennen. Da die Zylinderpaare 57a und 57 b gleich aufgebaut sind und nur zueinander wechselseitig verbaut sind, soll beispielhaft für beide Zylinderpaare 57a und 57b das erste Zylinderpaar 57a näher beschrieben werden. Dabei wird das erste Zylinderpaar 57a durch ein erstes Gehäuseelement 64a gebildet, das drehfest mit dem Ausgangselement 40 verbunden ist, bzw. durch das Gehäuseelement 64a gebildet wird. In dem ersten Gehäuseelement 64a befindet sich vom der Drehachse A aus gesehen radial außen ein erster Zylinder 67a in dem ein erster Kolben 65a verschiebbar vorgesehen ist und weiter radial innen ein zweiter Zylinder 68a, in dem ein zweiter Kolben 66a verschiebbar vorgesehen ist. Dabei ist hier der erste Zylinder 67a mit dem zweiten Zylinder 68a einmal durch eine erste Verbindungsöffnung 36a auf der jeweils einen Seite der Kolben 65a und 66a verbunden und bildet einen ersten Arbeitsraum 72a und ist weiter durch eine weitere Verbindungsöffnung 37a auf der jeweils anderen Seite der Kolben 65a und 66a verbunden und bildet einen zweiten Arbeitsraum 73a. Dabei befindet sich im jeweiligen Arbeitsraum 72a und 73a ein Wirkmedium 70a und 74a, vorzugsweise in Form einer Hydrauklikflüssigkeit. Hierdurch ergibt sich ein doppelt wirkender Zylinder, da sowohl beiden Seitenflächen der Kolben 65a und 66a je nach einer Bewegungsrichtung das Wirkmedium 70a und 74a verdrängen. Dabei ist hier der erste Kolben 65a mit dem ersten Eingangselement 20 und der zweite Kolben 66a mit dem zweiten Eingangselement 30 fest verbunden. Dabei ergibt sich durch den symmetrischen Verbau der beiden Zylinderpaare 57a und 57 b, dass auch der erste Kolben 65b des zweiten Zylinderpaares 57b fest mit dem ersten Eingangselement 20 und damit mit dem ersten Kolben 65a des ersten Zylinderpaares 57a verbunden ist. Gleiches gilt auch für den zweiten Kolben 66b des zweiten Zylinderpaares 57b, der ebenfalls fest mit dem zweiten Eingangselement 30 und damit fest mit dem zweiten Kolben 66a des ersten Zylinderpaares 57a verbunden ist.

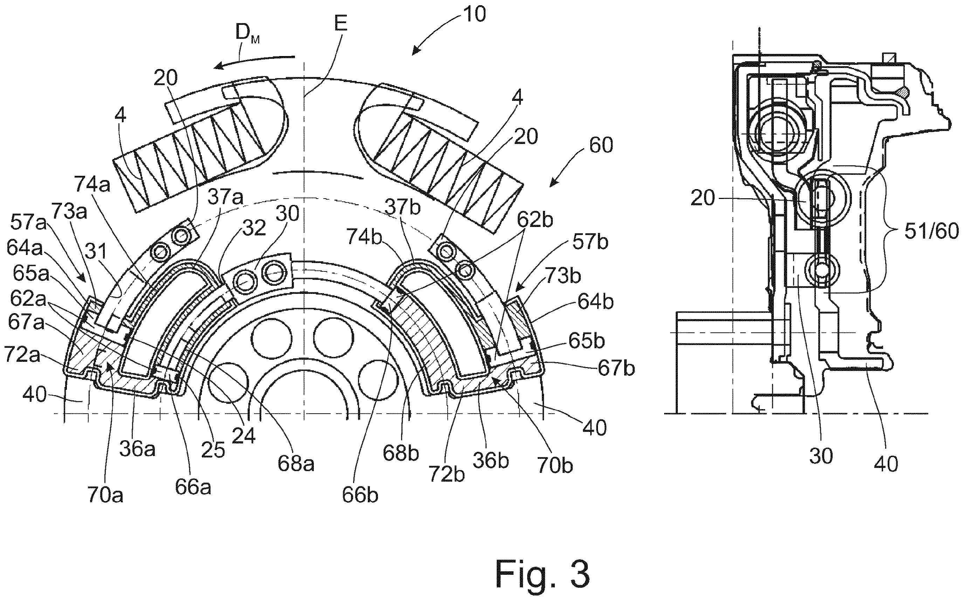

Die Figur 3 zeigt eine Drehschwingungsdämpfungsanordnung 10 wie in der Figur 1 und 2 beschrieben, jedoch ist hier ein Zugbetrieb dargestellt. Beim Anlegen eines Drehmomentes, wie hier im Zugbetrieb, schiebt sich der in Bewegungsrichtung steif an die Primärseite angebundene zweite Kolben 66a des direkten Pfades in den zweiten Zylinder 68a und wirkt über die Kolbenfläche auf das inkompressible Medium 70a. Aufgrund der Fahrzeugträgheit verharrt die Abtriebsseite, hier das Ausgangselement 40 in ihrem jeweiligen Zustand und wird nicht beschleunigt. Das inkompressible Medium 70a wirkt wiederum auf die Kolbenfläche des ersten Kolbens 65a des indirekten Pfades und übt eine Kraft auf das erste Eingangselement 20 und damit auf den Federspeicher 4 aus. Die zwei Kolben 65a und 66a werden so lange gegenläufig verschoben, bis sich ein Kraft- bzw. Momentgleichgewicht einstellt. Spätestens jetzt wird der statische Anteil der Kraft bzw. des Moments über das inkompressible Medium 70a an das erste Gehäuseelement 64a und damit an das Ausgangselement 40 übertragen. Der dynamische Momentanteil wird im Idealfall durch ein Schwingen des inkompressiblen Mediums 70a gegen das Feder-Masse-System im phasenverschobenen Pfad ausgelöscht und nicht auf das Ausgangselement 40 übertragen. Die Kolbendichtung 24 und 25 an den Kolben 65a und 66a des direkten und des phasenverschobenen Drehmomentweges 47, 48 dichten die zwei Arbeitsräume 72a und 73a mit dem inkompressiblen Medium 70a und 74a zueinander ab und die Kolbenstangendichtungen 31 und 32 gegenüber der Umgebung.

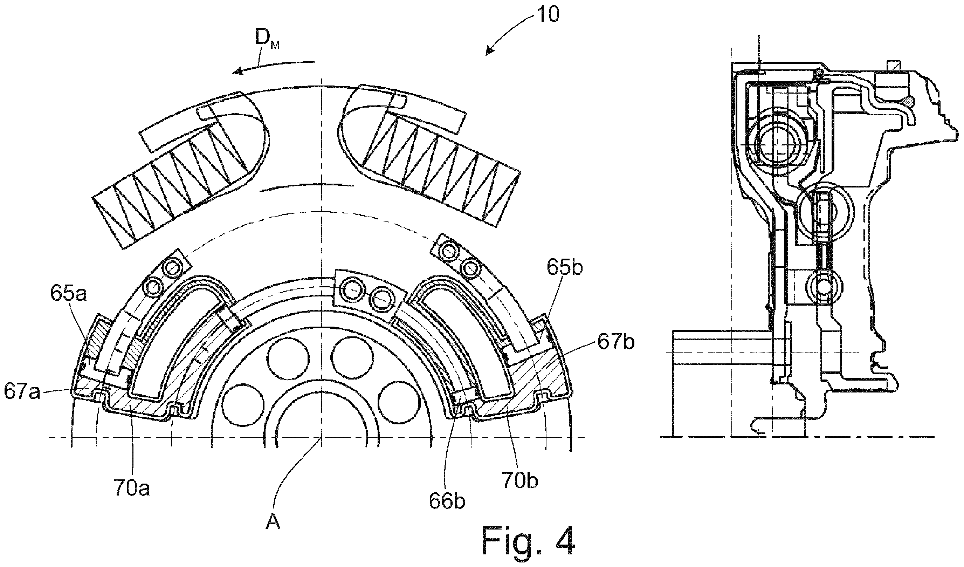

Die Figur 4 zeigt eine zeigt eine Drehschwingungsdämpfungsanordnung 10 wie in der Figur 1 und 2 beschrieben, jedoch ist hier ein Schubbetrieb dargestellt. Dies bedeutet, dass nun der zweite Kolben 66b des zweiten Zylinderpaares 57b in den zweiten Zylinder 68b einfährt, wodurch das Wirkmedium 70b verdrängt wird und der erste Kolben 65b des zweiten Zylinderpaares 57b aus dem ersten Zylinder 67b gedrückt wird. Da nun der erste Kolben 65b des zweiten Zylinderpaares 57b mit dem ersten Kolben 65a des ersten Zylinderpaares 57a fest verbunden ist, fährt der erste Kolben 65a des ersten Zylinderpaares 57a wieder in den ersten Zylinder 67a ein. Hierdurch wird vermieden, dass das Wirkmedium 70a und 70b auch auf Zug belastet wird und Kavitation entstehen kann und nur auf Druck belastet wird.

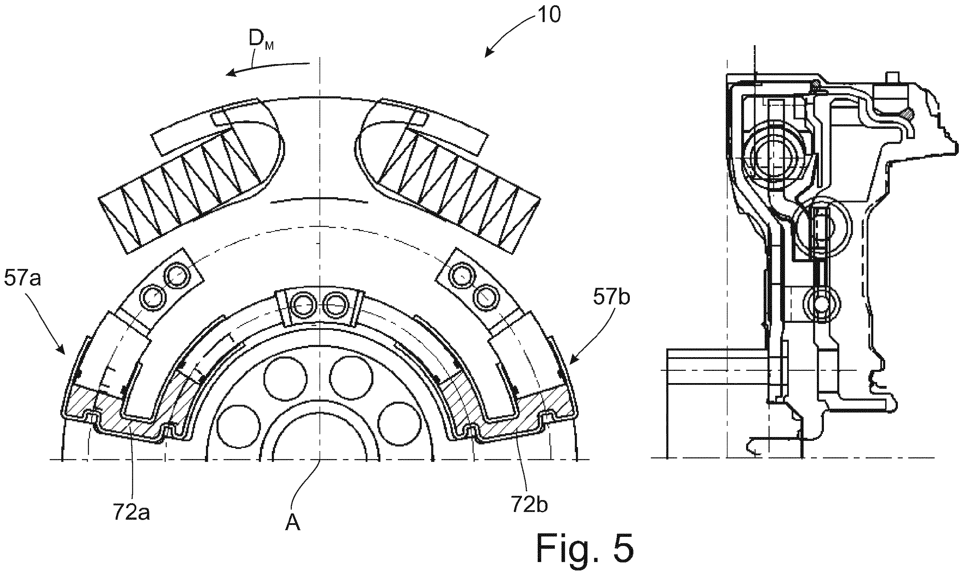

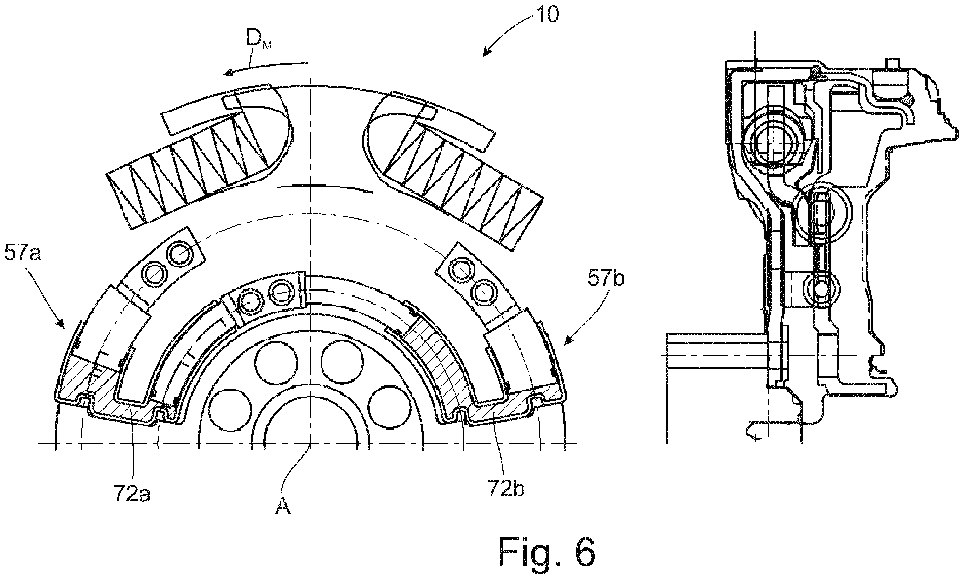

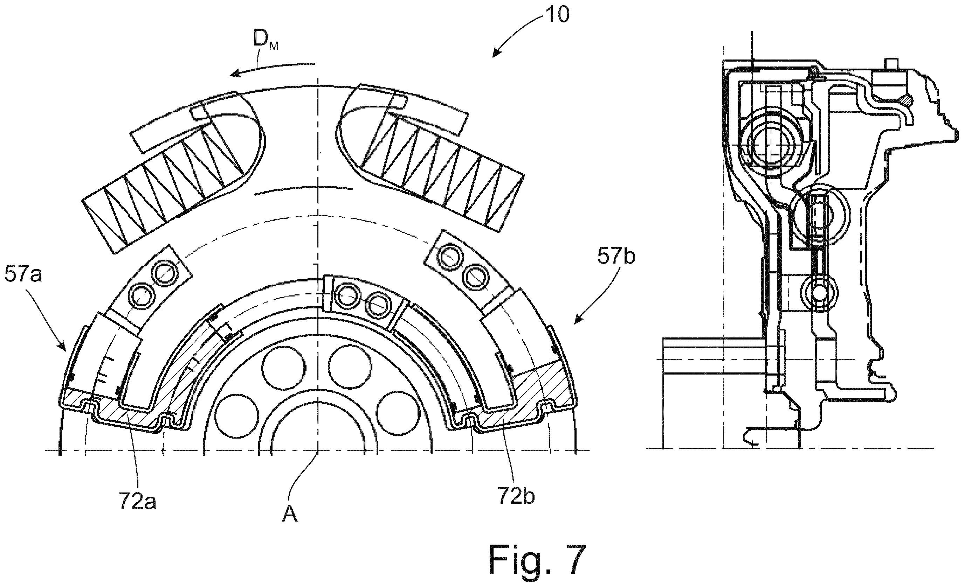

Die Figur 5 zeigt eine Drehschwingungsdämpfungsanordnung 10 wie in der Figur 1 und 2 beschrieben, jedoch sind die beiden Zylinderpaare 57a und 57 b einfach wirkend ausgeführt. Dies bedeutet, dass die zweiten Verbindungsöffnungen 37a und 37b entfallen und es somit jeweils nur einen einzigen Arbeitsraum 72a und 72b gibt. Hierdurch wird in einem Zylinder der Zugbetrieb und in dem anderen Zylinder der Schubbetrieb dargestellt. Um ein verspannen des Systems zu verhindern muss hier ebenfalls das Verhältnis der Kolbenflächen bei allen Zylindern gleich sein. Ein gleichseitiger Verbau bei dieser Kolbenausführung ist nicht möglich, da ansonsten bei Belastungswechsel Unterdruck im System entstehen kann. Dabei ist in der Figur 6 der Zugbetrieb und in der Figur 7 der Schubbetrieb dargestellt.

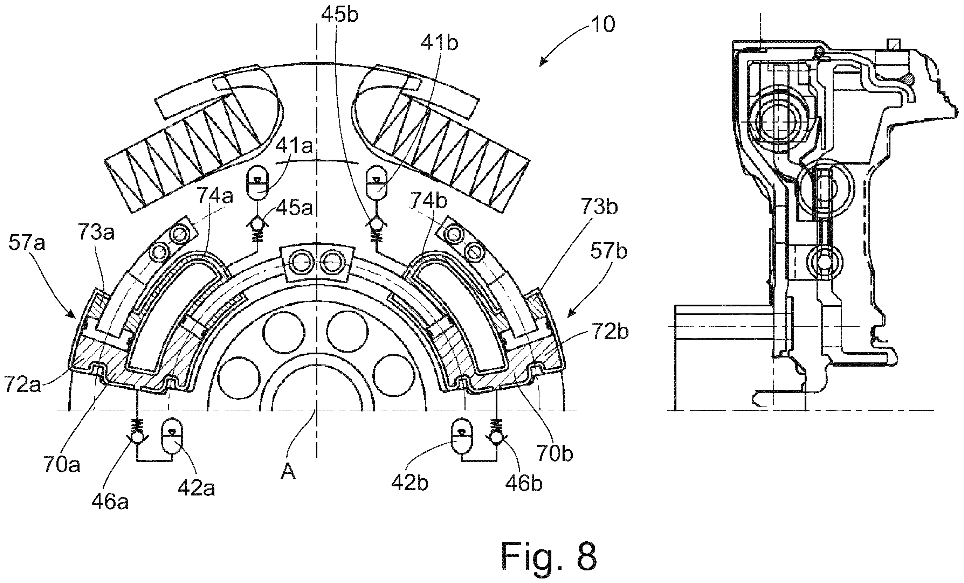

Die Figur 8 zeigt eine Drehschwingungsdämpfungsanordnung 10 wie in der Figur 1 und 2 beschrieben, jedoch sind an den jeweiligen Arbeitsräumen 72a und 73a, sowie 72b und 73b der beiden Zylinderpaare 57a und 57b Druckspeicher 42a und 41a, sowie 42b und 41b vorgesehen. Dabei sind wirkmäßig vor den Druckspeichern 42a und 41a, sowie 42b und 41b Rückschlagventile 46a und 45a, sowie 46b und 45b vorgesehen. Durch die Trägheiten und Nachgiebigkeiten im System entsteht auf der unbelasteten Seite, bei Zugbetrieb, die Schubseite und umgekehrt, ein Druckverlust. Dieser Druckverlust kann ebenfalls zum Entstehen von Unterdruck führen, weshalb ein Systemvordruck erforderlich wird um die Steifigkeit des Wirkmediums 70a und 70b, sowie 74a und 74b im Betriebsbereich konstant zu halten. Zur Einstellung und Aufrechterhaltung eines Systemvordruckes werden die genannten Druckspeicher benötigt, die im unbelasteten Zustand bei einer Druckdifferenz zwischen den Speichern und den Arbeitsräumen 72a und 72b, sowie 73a und 73b automatisch nachfüllt. Um im Betrieb die Steifigkeit des Wirkmediums 70aund 70b, sowie 74a und 74b nicht zu beeinflussen, werden die Druckspeicher 41a und 41b, sowie 42a und 42b über die jeweiligen Rückschlagventile 45a und 46a, sowie 45b und 46b angebunden, die bei Druckanstieg im System schließen.

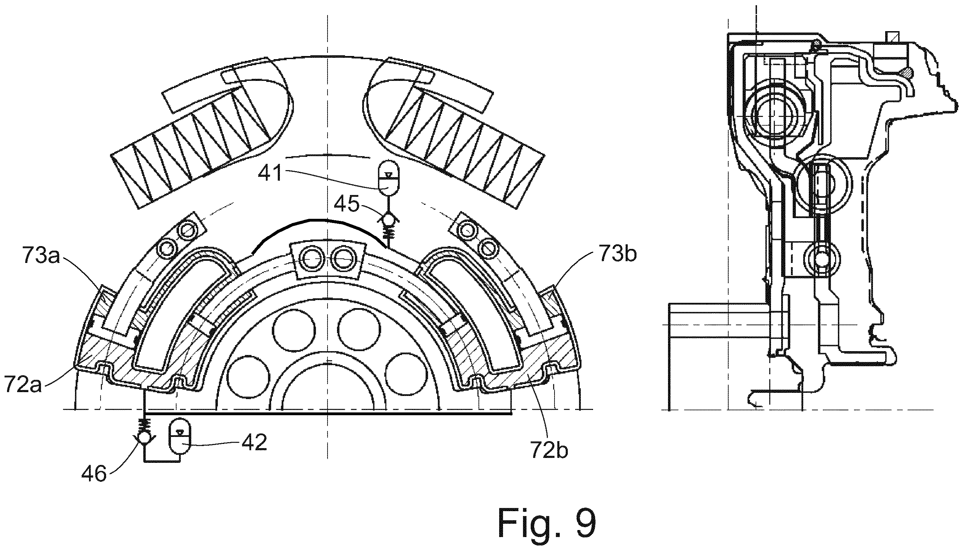

Die Figur 9 zeigt eine Drehschwingungsdämpfungsanordnung 10 wie in der Figur 8 beschrieben, jedoch ist hier für den jeweils ersten Arbeitsraum 72a und 72 b nur ein gemeinsamer Druckspeicher 42 mit vorgeschaltetem Rückschlagventil 46 vorgesehen. Auch die beiden zweiten Arbeitsräume 73a und 73b weisen nur einen gemeinsamen Druckspeicher 41 mit vorgeschaltetem Rückschlagventil 45 auf.

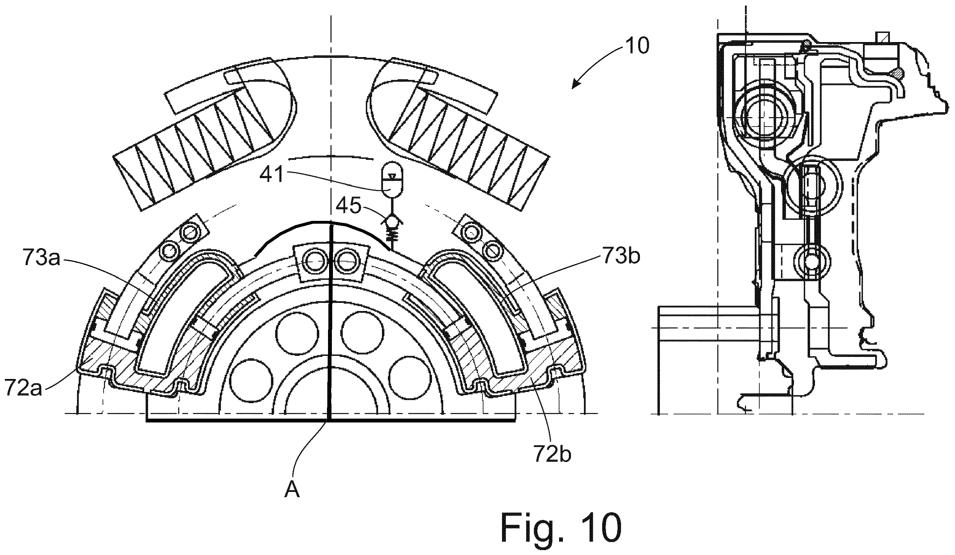

Die Figur 10 zeigt eine Drehschwingungsdämpfungsanordnung 10 wie in der Figur 8 beschrieben. Für den Fall, dass die Systemvordrücke in den Arbeitsräumen 72a und 72b, sowie 73a und 73b gleich sind kann auch nur ein gemeinsamer Druckspeicher 41 mit einem Rückschlagventil 45 verwendet werden.

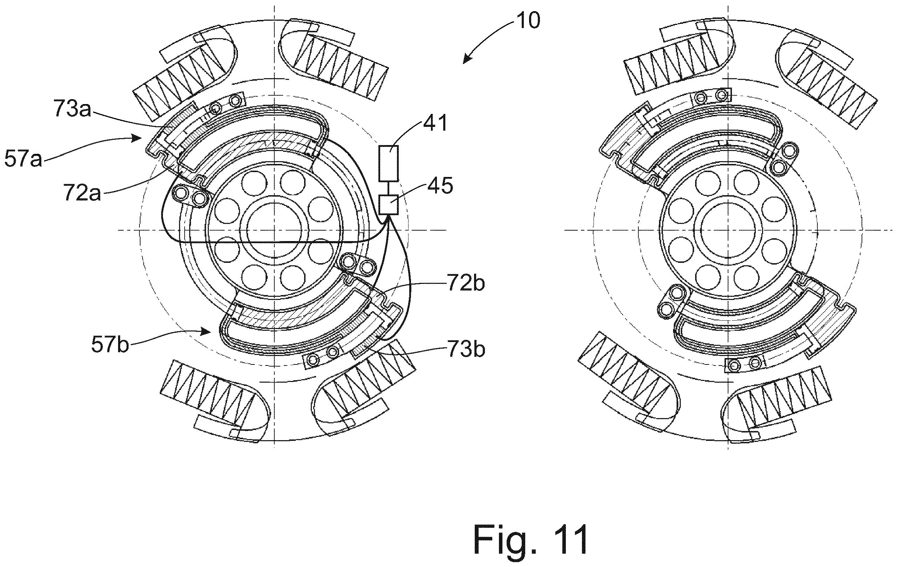

Die Figur 11 zeigt eine Drehschwingungsdämpfungsanordnung 10, jedoch sind hier die beiden Zylinderpaare 57a und 57b gleichseitig verbaut. Weiter ist hier für die verschiedenen Arbeitsräume 72a und 72b, sowie 73a und 73b nur ein gemeinsamer Druckspeicher 41 mit einem Rückschlagventil 45 vorgesehen.

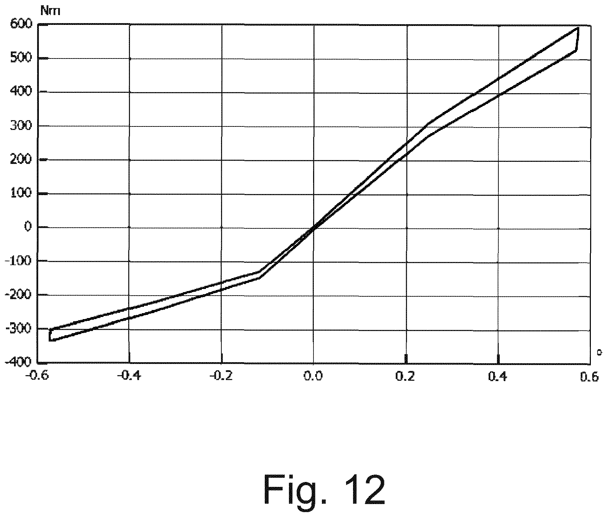

Die Figur 12 zeigt ein Diagramm, das die Fluidsteifigkeit (Nm/°) bei unterschiedlichem Vordruck darstellt. Um ein Abknicken der Kennlinie im Betriebsbereich zu vermeiden muss ein ausreichend großer Vordruck (Druck im unbelasteten System) gewählt werden.

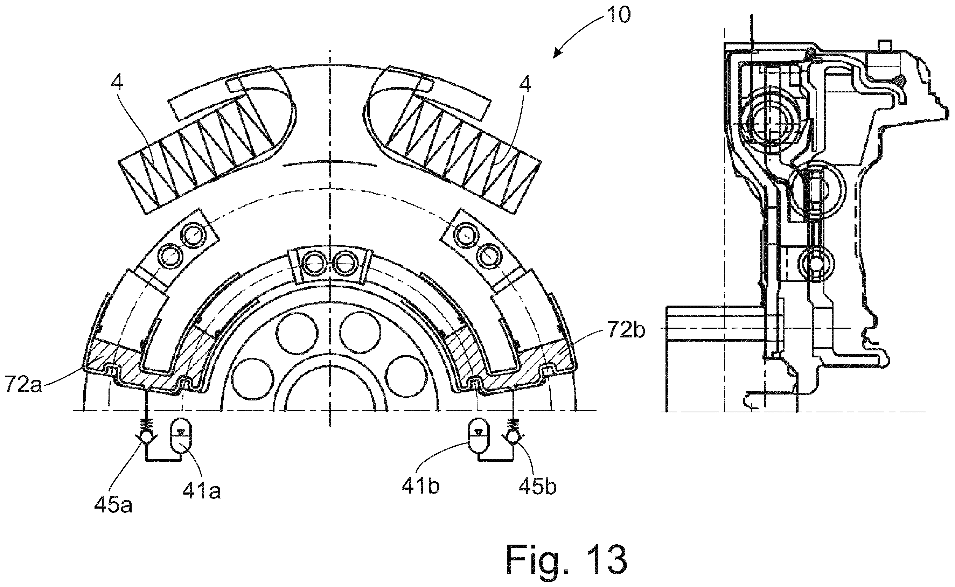

Die Figur 13 zeigt eine Drehschwingungsdämpfungsanordnung 10 wie in der Figur 5 beschrieben, jedoch sind an den beiden Arbeitsräumen 72a und 72b jeweils ein Druckspeicher 41a und 41b, sowie jeweils ein Rückschlagventil 45a und 45b vorgesehen. Dabei ist hier anzumerken, dass es auch vorteilhaft sein kann, wenn nur ein gemeinsamer Druckspeicher mit Rückschlagventil verwendet wird um den gleichen Systemvordruck in den beiden Arbeitsräumen 72a und 72b zu haben und um dadurch eine Relativverdrehung, also eine Vorspannung des Federsatzes 4 im unbelasteten Zustand zu vermeiden.

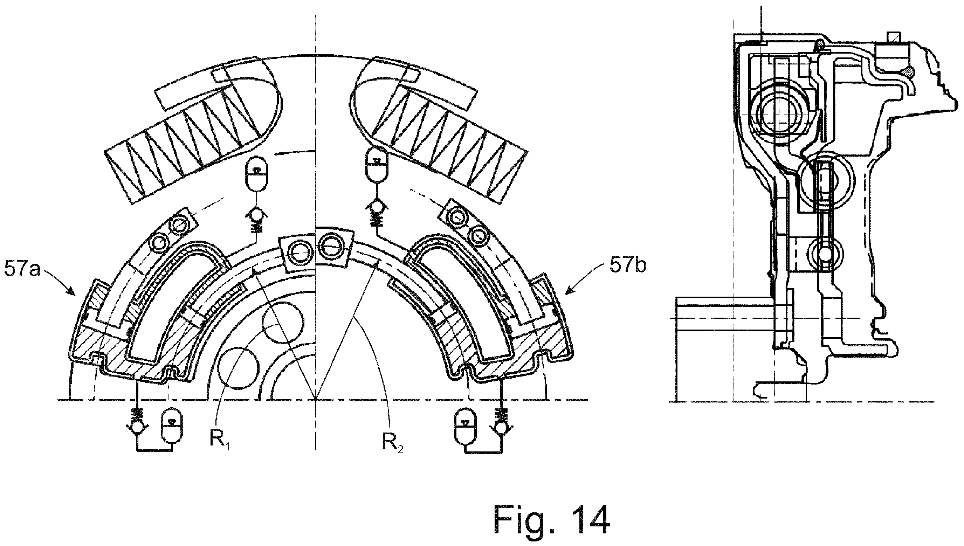

Die Figur 14 zeigt eine Drehschwingungsdämpfungsanordnung 10 wie in der Figur 8 beschrieben wobei hier zusätzlich die Möglichkeit eines Radienversatzes der jeweiligen Zylinderpaare 57a und 57b dargestellt ist. Dies bedeutet, dass hier das zweite Zylinderpaar 57b auf einem größeren Radius R2 vorgesehen ist, als das erste Zylinderpaar 57a auf einem Radius R1. Hierdurch kann eventuell der Bauraum besser genutzt werden. Bedingung ist hierbei, dass die Übersetzung i_12 konstant bleibt, um ein verspannen zu vermeiden. D.h. bei Änderung des Radienverhältnisses der Anbindungsradien der Kolben muss für ein Gleichbleiben von i_12 das Kolbenflächenverhältnis (i_12_translatorisch) angepasst werden. Hier sein nochmal auf die DE 10 2016 225 865 A1 hingewiesen, in der die Übersetzungsverhältnisse bereits erläutert wurden und daher als Stand der Technik vorausgesetzt werden.

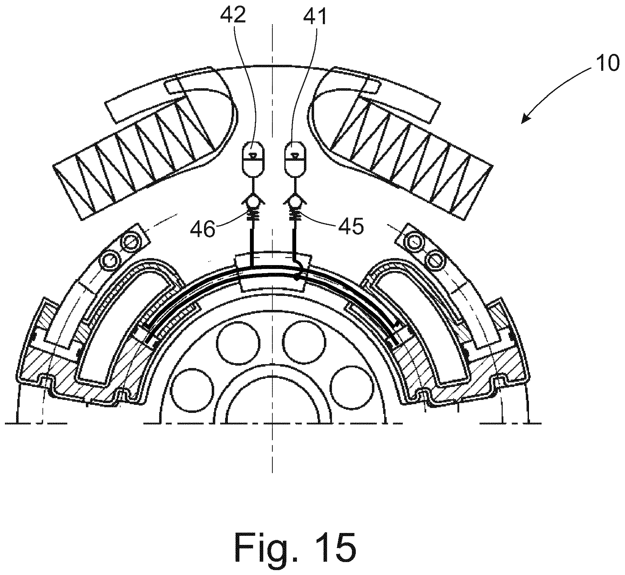

Die Figur 15 zeigt eine weitere Variante der Anbringung von Druckspeichern 41, 42 mit Rückschlagventil 45, 46 an einer Drehschwingungsdämpfungsanordnung 10, wie in der Figur 9 bereits beschrieben.

### Bezugszeichen

- 1: Primärelement
- 2: Sekundärelement
- 3: Dämpferelementanordnung
- 4: Federsatz
- 5: Zwischenmasse
- 10: Drehschwingungsdämpfungsanordnung
- 20: erstes Eingangselement
- 24: Kolbendichtung
- 25: Kolbendichtung
- 30: zweites Eingangselement
- 31: Kolbenstangendichtung
- 32: Kolbenstangendichtung
- 36a: erste Verbindungsöffnung
- 36b: erste Verbindungsöffnung
- 37a: zweite Verbindungsöffnung
- 37b: zweite Verbindungsöffnung
- 40: Ausgangselement
- 41a: Druckspeicher
- 41b: Druckspeicher
- 42a: Druckspeicher
- 42b: Druckspeicher
- 44: Phasenschieberanordnung
- 45a: Rückschlagventil
- 45b: Rückschlagventil
- 46a: Rückschlagventil
- 46b: Rückschlagventil
- 47: erster Drehmomentübertragungsweg
- 48: zweiter Drehmomentübertragungsweg
- 50: Eingangsbereich
- 51: Koppelanordnung
- 55: Ausgangsbereich
- 56: Schwingungssystem
- 57a: erstes Zylinderpaar
- 57b: zweites Zylinderpaar
- 60: Fluidgetriebeanordnung
- 61: Antriebsaggregat
- 62a: erstes Kolbenpaar
- 62b: zweites Kolbenpaar
- 63: Getriebe
- 64a: erstes Gehäuseelement
- 64b: zweites Gehäuseelement
- 65a: erster Kolben
- 65b: erster Kolben
- 66a: zweiter Kolben
- 66b: zweiter Kolben
- 67a: erster Zylinder
- 67b: erster Zylinder
- 68a: zweiter Zylinder
- 68b: zweiter Zylinder
- 70a: Wirkmedium
- 70b: Wirkmedium
- 71: Hydraulikflüssigkeit
- 72a: erster Arbeitsraum
- 72b: erster Arbeitsraum
- 73a: zweiter Arbeitsraum
- 73b: zweiter Arbeitsraum
- 74a: Wirkmedium
- 74b: Wirkmedium
- 90: Umgebung
- A: Drehachse
- d1: Durchmesser erster Kolben
- d2: Durchmesser zweiter Kolben
- Mges: Gesamtdrehmoment
- Ma1: Drehmomentanteil 1
- Ma1: Drehmomentanteil 2
- Maus: Ausgangsdrehmoment
- Dm: Drehrichtung Motor

## Patentansprüche

1. Drehschwingungsdämpfungsanordnung (10) für einen Antriebsstrang eines Kraftfahrzeugs, umfassend einen zur Drehung um eine Drehachse (A) anzutreibenden Eingangsbereich (50) und einen Ausgangsbereich (55), wobei zwischen dem Eingangsbereich (50) und dem Ausgangsbereich (55) zueinander parallel ein erster Drehmomentübertragungsweg (47) zur Übertragung eines ersten Drehmomentanteils (Ma1) und ein zweiter Drehmomentübertragungsweg (48) zur Übertragung eines zweiten Drehmomentanteils (Ma2) eines zwischen dem Eingangsbereich (50) und dem Ausgangsbereich (55) zu übertragenden Gesamtdrehmomentes (Mges) vorgesehen sind,
- eine Phasenschieberanordnung (44) wenigstens im ersten Drehmomentübertragungsweg (47), zur Erzeugung einer Phasenverschiebung von über den ersten Drehmomentübertragungsweg (47) geleiteten Drehungleichförmigkeiten bezüglich über den zweiten Drehmomentübertragungsweg (48) geleiteten Drehungleichförmigkeiten, wobei die Phasenschieberanordnung (44) ein Schwingungssystem (56) mit einem Primärelement (1) und einem gegen die Rückstellwirkung einer Dämpferelementanordnung (3) bezüglich des Primärelements (1) um die Drehachse (A) drehbaren Zwischenmasse (5) umfasst,
- eine Koppelanordnung (51) zur Zusammenführung des über den ersten Drehmomentübertragungsweg (47) übertragenen ersten Drehmomentanteils (Ma1) und des über den zweiten Drehmomentübertragungsweg (48) übertragenen zweiten Drehmomentanteils (Ma2) und zur Weiterleitung des zusammengeführten Drehmoments (Maus) an den Ausgangsbereich (55), wobei die Koppelanordnung (51) ein erstes Eingangselement (20), verbunden mit dem ersten Drehmomentübertragungsweg (47), ein zweites Eingangselement (30), verbunden mit dem zweiten Drehmomentübertragungsweg (48) und ein Ausgangselement (40), verbunden mit dem Ausgangsbereich (55) umfasst, wobei die Koppelanordnung (51) als eine Fluidgetriebeanordnung (60) ausgeführt ist,
**dadurch gekennzeichnet, dass** die Fluidgetriebeanordnung (60) ein erstes Zylinderpaar (57a) und ein zweites Zylinderpaar (57b) umfasst, wobei das erste Zylinderpaar (57a) zu dem zweiten Zylinderpaar (57b) wechselseitig ausgeführt ist.

2. Drehschwingungsdämpfungsanordnung (10) nach Anspruch 1, **dadurch gekennzeichnet, dass** das erste Zylinderpaar (57a) zumindest ein erstes Kolbenpaar (62a), ein erstes Gehäuseelement (64a) und ein Wirkmedium (70a) umfasst und dass das zweite Zylinderpaar (57b) zumindest ein zweites Kolbenpaar (62b) ein zweites Gehäuseelement (64b) und ein Wirkmedium (70b) umfasst.

3. Drehschwingungsdämpfungsanordnung (10) nach Anspruch 2, **dadurch gekennzeichnet, dass** das erste Kolbenpaar (62a) einen ersten Kolben (65a) und einen zweiten Kolben (66a) umfasst, wobei das erste Gehäuseelement (64a) einen ersten Zylinder (67a) und einen zweiten Zylinder (68a) umfasst, wobei der erste Zylinder (67a) und der zweite Zylinder (68a) mittels einer Verbindungsöffnung (36a) miteinander verbunden sind und wobei das zweite Kolbenpaar (62b) einen ersten Kolben (65b) und einen zweiten Kolben (66b) umfasst, wobei das zweite Gehäuseelement (64b) einen ersten Zylinder (67b) und einen zweiten Zylinder (68b) umfasst, wobei der erste Zylinder (67b) und der zweite Zylinder (68b) mittels einer Verbindungsöffnung (36b) miteinander verbunden sind.

4. Drehschwingungsdämpfungsanordnung (10) nach Anspruch 3, **dadurch gekennzeichnet, dass** im ersten Zylinderpaar (57a) der erste Kolben (65a) in dem ersten Zylinder (67a) und der zweite Kolben (66a) in dem zweiten Zylinder (68a) verschiebbar angeordnet sind, wobei die beiden Kolben (65a; 66a) mittels des Wirkmediums (70a) in Wirkverbindung stehen und einen ersten Arbeitsraum (72a) bilden und wobei im zweiten Zylinderpaar (57b) der erste Kolben (65b) in dem ersten Zylinder (67b) und der zweite Kolben (66b) in dem zweiten Zylinder (68b) verschiebbar angeordnet sind, wobei die beiden Kolben (65b; 66b) mittels des Wirkmediums (70b) in Wirkverbindung stehen und einen ersten Arbeitsraum (72b) bilden.

5. Drehschwingungsdämpfungsanordnung (10) nach Anspruch 3 oder 4, **dadurch gekennzeichnet, dass** der erste Kolben (65a) des ersten Zylinderpaares (57a) und der ersten Kolben (65b) des zweiten Zylinderpaares (57b) mit dem ersten Eingangselement (20) der Koppelanordnung (51) verbunden sind und dass der der zweite Kolben (66a) des ersten Zylinderpaares (57a) und der zweite Kolben (66b) des zweiten Zylinderpaares (57b) mit dem zweiten Eingangselement (30) der Koppelanordnung (51) verbunden sind und wobei das erste und das zweite Gehäuseelement (64a, 64b) mit dem Ausgangselement (40) verbunden ist.

6. Drehschwingungsdämpfungsanordnung (10) nach einem der Ansprüche 3 bis 5, **dadurch gekennzeichnet, dass** bei einer relativen Positionsänderung von einem der beiden Kolben (65a; 66a) des ersten Zylinderpaares (57a) zu dem Gehäuseelement (64a) der andere der beiden Kolben (66a, 65a) seine Position gegenläufig verändert und wobei der erste Kolben (65a) des ersten Zylinderpaares (57a) mit dem ersten Kolben (65b) des zweiten Zylinderpaares (57b) fest verbunden ist und wobei der zweite Kolben (66a) des ersten Zylinderpaares (57a) mit dem zweiten Kolben (66b) des zweiten Zylinderpaares (57b) fest verbunden ist.

7. Drehschwingungsdämpfungsanordnung (10) nach einem der Ansprüche 2 bis 6, **dadurch gekennzeichnet, dass** ein Durchmesser d1 des jeweils ersten Kolbens (65a; 65b) größer oder gleich oder kleiner als ein Durchmesser d2 des jeweils zweiten Kolbens (66a, 66b) ist.

8. Drehschwingungsdämpfungsanordnung (10) nach einem der Ansprüche 3 bis 7, **dadurch gekennzeichnet, dass** das erste und das zweite Zylinderpaar (57a, 57b) einen gekrümmten Verlauf oder einen geraden Verlauf aufweisen.

9. Drehschwingungsdämpfungsanordnung (10) nach einem der Ansprüche 3 bis 8, **dadurch gekennzeichnet, dass** das erste Zylinderpaar (57a) und das zweite Zylinderpaar (57b) jeweils eine zweite Verbindungsöffnung (37a,b) vorsehen, wobei die zweite Verbindungsöffnungen (37a,b) zu den jeweils ersten Verbindungsöffnungen (36a,b) in Reihe vorgesehen sind, so dass jeweils ein zweiter Arbeitsraum (73a,b) gebildet wird, der jeweils mit einem Wirkmedium (74a,b) gefüllt ist, so dass jeweils ein Zylinderpaar (57a,b) doppelwirkend ausgeführt ist.

10. Drehschwingungsdämpfungsanordnung (10) nach einem der Ansprüche 2 bis 9, **dadurch gekennzeichnet, dass** das Wirkmedium (70) ein inkompressibles Medium ist.

11. Drehschwingungsdämpfungsanordnung (10) nach Anspruch 10, **dadurch gekennzeichnet, dass** das inkompressible Medium ein Fluid ist.

12. Drehschwingungsdämpfungsanordnung (10) nach einem der Ansprüche 3 bis 11, **dadurch gekennzeichnet, dass** jeweils an dem ersten Arbeitsraum (72a,b) des ersten bzw. zweiten Zylinderpaares (57a,b) ein Druckspeicher (42a,b) und in Wirkrichtung vor dem Druckspeicher (42a,b) jeweils ein Rückschlagventil (46a,b) vorgesehen ist.

13. Drehschwingungsdämpfungsanordnung (10) nach einem der Ansprüche 9 bis 12, **dadurch gekennzeichnet, dass** jeweils an dem zweiten Arbeitsraum (73a, b) des ersten bzw. zweiten Zylinderpaares (57a, b) ein Druckspeicher (41a,b) und in Wirkrichtung vor dem Druckspeicher (41a,b) jeweils ein Rückschlagventil (45a, b) vorgesehen ist.

14. Drehschwingungsdämpfungsanordnung (10) nach einem der Ansprüche 3 bis 11, **dadurch gekennzeichnet, dass** der ersten Arbeitsraum (72a) des ersten Zylinderpaares (57a) und der ersten Arbeitsraum (72b) des zweiten Zylinderpaares (57b) einen gemeinsamen Druckspeicher (42) vorsehen und in Wirkrichtung vor dem Druckspeicher (42) ein Rückschlagventil (46) vorgesehen ist.

15. Drehschwingungsdämpfungsanordnung (10) nach einem der Ansprüche 9 bis 12, **dadurch gekennzeichnet, dass** der zweite Arbeitsraum (73a) des ersten Zylinderpaares (57a) und der zweite Arbeitsraum (73b) des zweiten Zylinderpaares (57b) einen gemeinsamen Druckspeicher (41) vorsehen und in Wirkrichtung vor dem Druckspeicher (41) ein Rückschlagventil (45) vorgesehen ist.

16. Drehschwingungsdämpfungsanordnung (10) nach einem der Ansprüche 9 bis 11, **dadurch gekennzeichnet, dass** der erste und der zweite Arbeitsraum (72a, 73a) des ersten Zylinderpaares (57a) und der erste und zweite Arbeitsraum (72b, 73b) des zweiten Zylinderpaares (57b) einen gemeinsamen Druckspeicher (41) vorsehen und in Wirkrichtung vor dem Druckspeicher (41) ein Rückschlagventil (45) vorgesehen ist.

17. Drehschwingungsdämpfungsanordnung (10) nach einem der Ansprüche 1 bis 16, **dadurch gekennzeichnet, dass** in Umfangsrichtung um die Drehachse (A) zwei oder mehrere Fluidgetriebeanordnungen (60) gleichmäßig oder ungleichmäßig verteilt sind.

18. Drehschwingungsdämpfungsanordnung (10) nach einem der Ansprüche 1 bis 7, 8 erste Alternative, 9 bis 17 **dadurch gekennzeichnet, dass** das erste Zylinderpaar (57a) und das zweite Zylinderpaar (57b) auf gleichen Radien oder auf unterschiedlichen Radien um die Drehachse A vorgesehen sind.

19. Drehschwingungsdämpfungsanordnung (10) für einen Antriebsstrang eines Kraftfahrzeugs, umfassend einen zur Drehung um eine Drehachse (A) anzutreibenden Eingangsbereich (50) und einen Ausgangsbereich (55), wobei zwischen dem Eingangsbereich (50) und dem Ausgangsbereich (55) zueinander parallel ein erster Drehmomentübertragungsweg (47) zur Übertragung eines ersten Drehmomentanteils (Ma1) und ein zweiter Drehmomentübertragungsweg (48) zur Übertragung eines zweiten Drehmomentanteils (Ma2) eines zwischen dem Eingangsbereich (50) und dem Ausgangsbereich (55) zu übertragenden Gesamtdrehmomentes (Mges) vorgesehen sind,
- eine Phasenschieberanordnung (44) wenigstens im ersten Drehmomentübertra-gungsweg (47), zur Erzeugung einer Phasenverschiebung von über den ersten Drehmomentübertragungsweg (47) geleiteten Drehungleichförmigkeiten bezüglich über den zweiten Drehmomentübertragungsweg (48) geleiteten Drehungleichförmigkeiten, wobei die Phasenschieberanordnung (44) ein Schwingungssystem (56) mit einem Primärelement (1) und einem gegen die Rückstellwirkung einer Dämpferelementanordnung (3) bezüglich des Primärelements (1) um die Drehachse (A) drehbaren Zwischenmasse (5) umfasst,
- eine Koppelanordnung (51) zur Zusammenführung des über den ersten Drehmomentübertragungsweg (47) übertragenen ersten Drehmomentanteils (Ma1) und des über den zweiten Drehmomentübertragungsweg (48) übertrage-nen zweiten Drehmomentanteils (Ma2) und zur Weiterleitung des zusammenge-führten Drehmoments (Maus) an den Ausgangsbereich (55), wobei die Koppelan-ordnung (51) ein erstes Eingangselement (20), verbunden mit dem ersten Drehmomentübertragungsweg (47), ein zweites Eingangselement (30), verbunden mit dem zweiten Drehmomentübertragungsweg (48) und ein Ausgangselement (40), verbunden mit dem Ausgangsbereich (55) umfasst, wobei die Koppelanordnung (51) als eine Fluidgetriebeanordnung (60) ausgeführt ist,
**dadurch gekennzeichnet, dass** die Fluidgetriebeanordnung (60) ein erstes Zylinderpaar (57a) und ein zweites Zylinderpaar (57b) umfasst, wobei das erste Zylinderpaar (57a) zu dem zweiten Zylinderpaar (57b) gleichseitig ausgeführt ist und wobei die Arbeitsräume (72a, 72b, 73a, 73b) des ersten und zweiten Zylinderpaares (57a, 57b) je einen Druckspeicher oder einen gemeinsamen Druckspeicher aufweisen und wobei in Wirkrichtung vor dem Druckspeicher ein Rückschlagventil vorgesehen ist.

## Claims

1. Torsional vibration damping arrangement (10) for a drive train of a motor vehicle, comprising an input region (50), to be driven for rotation about a rotational axis (A), and an output region (55), a first torque transmission path (47) for the transmission of a first torque component (Ma1) and a second torque transmission path (48) for the transmission of a second torque component (Ma2) of a total torque (Mges) to be transmitted between the input region (50) and the output region (55) being provided parallel to one another between the input region (50) and the output region (55),
- a phase shifter arrangement (44) at least in the first torque transmission path (47), for the generation of a phase shift of rotational non-uniformities conducted via the first torque transmission path (47) with regard to rotational non-uniformities conducted via the second torque transmission path (48), the phase shifter arrangement (44) comprising a vibration system (56) with a primary system (1) and an intermediate mass (5) which can be rotated about the rotational axis (A) with regard to the primary element (1) counter to the restoring action of a damper element arrangement (3),
- a coupling arrangement (51) for merging the first torque component (Ma1) transmitted via the first torque transmission path (47) and the second torque component (Ma2) transmitted via the second torque transmission path (48) and for forwarding the merged torque (Maus) to the output region (55), the coupling arrangement (51) comprising a first input element (20), connected to the first torque transmission path (47), a second input element (30), connected to the second torque transmission path (48), and an output element (40), connected to the output region (55), the coupling arrangement (51) being configured as a fluid transmission arrangement (60),
**characterized in that** the fluid transmission arrangement (60) comprises a first cylinder pair (57a) and a second cylinder pair (57b), the first cylinder pair (57a) being of alternating configuration with respect to the second cylinder pair (57b).

2. Torsional vibration damping arrangement (10) according to Claim 1, **characterized in that** the first cylinder pair (57a) comprises at least one first piston pair (62a), a first housing element (64a) and an operating medium (70a), and **in that** the second cylinder pair (57b) comprises at least one second piston pair (62b), a second housing element (64b) and an operating medium (70b).

3. Torsional vibration damping arrangement (10) according to Claim 2, **characterized in that** the first piston pair (62a) comprises a first piston (65a) and a second piston (66a), the first housing element (64a) comprising a first cylinder (67a) and a second cylinder (68a), the first cylinder (67a) and the second cylinder (68a) being connected to one another by means of a connecting opening (36a), and the second piston pair (62b) comprising a first piston (65b) and a second piston (66b), the second housing element (64b) comprising a first cylinder (67b) and a second cylinder (68b), the first cylinder (67b) and the second cylinder (68b) being connected to one another by means of a connecting opening (36b) .

4. Torsional vibration damping arrangement (10) according to Claim 3, **characterized in that**, in the first cylinder pair (57a), the first piston (65a) is arranged displaceably in the first cylinder (67a) and the second piston (66a) is arranged displaceably in the second cylinder (68a), the two pistons (65a; 66a) being operatively connected by means of the operating medium (70a) and forming a first working space (72a), and, in the second cylinder pair (57b), the first piston (65b) being arranged displaceably in the first cylinder (67b) and the second piston (66b) being arranged displaceably in the second cylinder (68b), the two pistons (65b; 66b) being operatively connected by means of the operating medium (70b) and forming a first working space (72b).

5. Torsional vibration damping arrangement (10) according to Claim 3 or 4, **characterized in that** the first piston (65a) of the first cylinder pair (57a) and the first piston (65b) of the second cylinder pair (57b) are connected to the first input element (20) of the coupling arrangement (51), and **in that** the second piston (66a) of the first cylinder pair (57a) and the second piston (66b) of the second cylinder pair (57b) are connected to the second input element (30) of the coupling arrangement (51), and the first and the second housing element (64a, 64b) being connected to the output element (40).

6. Torsional vibration damping arrangement (10) according to one of Claims 3 to 5, **characterized in that**, in the case of a relative positional change of one of the two pistons (65a; 66a) of the first cylinder pair (57a) with respect to the housing element (64a), the other one of the two pistons (66a, 65a) changes its position in the opposite direction, and the first piston (65a) of the first cylinder pair (57a) being connected fixedly to the first piston (65b) of the second cylinder pair (57b), and the second piston (66a) of the first cylinder pair (57a) being connected fixedly to the second piston (66b) of the second cylinder pair (57b).

7. Torsional vibration damping arrangement (10) according to one of Claims 2 to 6, **characterized in that** a diameter d1 of the respective first piston (65a; 65b) is greater than or equal to or smaller than a diameter d2 of the respective second piston (66a, 66b).

8. Torsional vibration damping arrangement (10) according to one of Claims 3 to 7, **characterized in that** the first and the second cylinder pair (57a, 57b) have a curved course or a straight course.

9. Torsional vibration damping arrangement (10) according to one of Claims 3 to 8, **characterized in that** the first cylinder pair (57a) and the second cylinder pair (57b) in each case provide a second connecting opening (37a,b), the second connecting openings (37a,b) being provided in series with respect to the respective first connecting openings (36a,b), with the result that a second working space (73a,b) is in each case formed which is filled in each case with an operating medium (74a,b), with the result that in each case one cylinder pair (57a,b) is of double-acting configuration.

10. Torsional vibration damping arrangement (10) according to one of Claims 2 to 9, **characterized in that** the operating medium (70) is an incompressible medium.

11. Torsional vibration damping arrangement (10) according to Claim 10, **characterized in that** the incompressible medium is a fluid.

12. Torsional vibration damping arrangement (10) according to one of Claims 3 to 11, **characterized in that** a pressure accumulator (42a,b) is provided in each case on the first working space (72a,b) of the first and second cylinder pair (57a,b), and in each case one check valve (46a,b) is provided upstream of the pressure accumulator (42a,b) in the operating direction.

13. Torsional vibration damping arrangement (10) according to one of Claims 9 to 12, **characterized in that** a pressure accumulator (41a,b) is provided in each case on the second working space (73a, b) of the first and second cylinder pair (57a, b), and in each case one check valve (45a, b) is provided upstream of the pressure accumulator (41a,b) in the operating direction.

14. Torsional vibration damping arrangement (10) according to one of Claims 3 to 11, **characterized in that** the first working space (72a) of the first cylinder pair (57a) and the first working space (72b) of the second cylinder pair (57b) provide a common pressure accumulator (42), and a check valve (46) is provided upstream of the pressure accumulator (42) in the operating direction.

15. Torsional vibration damping arrangement (10) according to one of Claims 9 to 12, **characterized in that** the second working space (73a) of the first cylinder pair (57a) and the second operating space (73b) of the second cylinder pair (57b) provide a common pressure accumulator (41), and a check valve (45) is provided upstream of the pressure accumulator (41) in the operating direction.

16. Torsional vibration damping arrangement (10) according to one of Claims 9 to 11, **characterized in that** the first and the second working space (72a, 73a) of the first cylinder pair (57a) and the first and second working space (72b, 73b) of the second cylinder pair (57b) provide a common pressure accumulator (41), and a check valve (45) is provided upstream of the pressure accumulator (41) in the operating direction.

17. Torsional vibration damping arrangement (10) according to one of Claims 1 to 16, **characterized in that** two or more fluid transmission arrangements (60) are distributed uniformly or non-uniformly about the rotational axis (A) in the circumferential direction.

18. Torsional vibration damping arrangement (10) according to one of Claims 1 to 7, first alternative of 8, and 9 to 17, **characterized in that** the first cylinder pair (57a) and the second cylinder pair (57b) are provided on identical radii or on different radii about the rotational axis A.

19. Torsional vibration damping arrangement (10) for a drive train of a motor vehicle, comprising an input region (50), to be driven for rotation about a rotational axis (A), and an output region (55), a first torque transmission path (47) for the transmission of a first torque component (Ma1) and a second torque transmission path (48) for the transmission of a second torque component (Ma2) of a total torque (Mges) to be transmitted between the input region (50) and the output region (55) being provided parallel to one another between the input region (50) and the output region (55),
- a phase shifter arrangement (44) at least in the first torque transmission path (47), for the generation of a phase shift of rotational non-uniformities conducted via the first torque transmission path (47) with regard to rotational non-uniformities conducted via the second torque transmission path (48), the phase shifter arrangement (44) comprising a vibration system (56) with a primary system (1) and an intermediate mass (5) which can be rotated about the rotational axis (A) with regard to the primary element (1) counter to the restoring action of a damper element arrangement (3),
- a coupling arrangement (51) for merging the first torque component (Ma1) transmitted via the first torque transmission path (47) and the second torque component (Ma2) transmitted via the second torque transmission path (48) and for forwarding the merged torque (Maus) to the output region (55), the coupling arrangement (51) comprising a first input element (20), connected to the first torque transmission path (47), a second input element (30), connected to the second torque transmission path (48), and an output element (40), connected to the output region (55), the coupling arrangement (51) being configured as a fluid transmission arrangement (60),
**characterized in that** the fluid transmission arrangement (60) comprises a first cylinder pair (57a) and a second cylinder pair (57b), the first cylinder pair (57a) being of same-side configuration with respect to the second cylinder pair (57b), and the working spaces (72a, 72b, 73a, 73b) of the first and second cylinder pair (57a, 57b) in each case having a pressure accumulator or a common pressure accumulator, and a check valve being provided upstream of the pressure accumulator in the operating direction.

## Revendications

1. Agencement d'amortissement de vibrations de torsion (10) pour une chaîne cinématique d'un véhicule automobile, comprenant une zone d'entrée (50) à entraîner en rotation autour d'un axe de rotation (A) et une zone de sortie (55), dans lequel entre la zone d'entrée (50) et la zone de sortie (55), en parallèle l'un à l'autre, un premier trajet de transmission de couple (47) pour la transmission d'une première partie de couple (Ma1) et un deuxième trajet de transmission de couple (48) pour la transmission d'une deuxième partie de couple (Ma2) d'un couple total (Mges) à transmettre entre la zone d'entrée (50) et la zone de sortie (55) sont prévus,
- un agencement de déphasage (44) au moins dans le premier trajet de transmission de couple (47) pour générer un déphasage des irrégularités de rotation dirigées sur le premier trajet de transmission de couple (47) par rapport à des irrégularités de rotation dirigées sur le deuxième trajet de transmission de couple (48), dans lequel l'agencement de déphasage (44) comprend un système de vibration (56) pourvu d'un élément primaire (1) et d'une masse intermédiaire (5) pouvant tourner autour de l'axe de rotation (A) contre l'effet de rappel d'un agencement d'élément amortisseur (3) par rapport à l'élément primaire (1),
- un agencement de couplage (51) pour réunir la première partie de couple (Ma1) transmise par le premier trajet de transmission de couple (47) et la deuxième partie de couple (Ma2) transmise par le deuxième trajet de transmission de couple (48), et pour retransmettre le couple réuni (Maus) à la zone de sortie (55), dans lequel l'agencement de couplage (51) comprend un premier élément d'entrée (20) relié au premier trajet de transmission de couple (47), un deuxième élément d'entrée (30) relié au deuxième trajet de transmission de couple (48) et un élément de sortie (40) relié à la zone de sortie (55), dans lequel l'agencement de couplage (51) est réalisé sous la forme d'un agencement de transmission à fluide (60),
**caractérisé en ce que** l'agencement de transmission à fluide (60) comprend une première paire de cylindres (57a) et une deuxième paire de cylindres (57b), dans lequel la première paire de cylindres (57a) est configurée de l'autre côté par rapport à la deuxième paire de cylindres (57b).

2. Agencement d'amortissement de vibrations de torsion (10) selon la revendication 1, **caractérisé en ce que** la première paire de cylindres (57a) comprend au moins une première paire de pistons (62a), un premier élément de carter (64a) et un agent actif (70a), et **en ce que** la deuxième paire de cylindres (57b) comprend au moins une deuxième paire de pistons (62b), un deuxième élément de carter (64b) et un agent actif (70b).

3. Agencement d'amortissement de vibrations de torsion (10) selon la revendication 2, **caractérisé en ce que** la première paire de pistons (62a) comprend un premier piston (65a) et un deuxième piston (66a), dans lequel le premier élément de carter (64a) comprend un premier cylindre (67a) et un deuxième cylindre (68a), dans lequel le premier cylindre (67a) et le deuxième cylindre (68a) sont reliés l'un à l'autre au moyen d'une ouverture de raccordement (36a), et dans lequel la deuxième paire de pistons (62b) comprend un premier piston (65b) et un deuxième piston (66b), dans lequel le deuxième élément de carter (64b) comprend un premier cylindre (67b) et un deuxième cylindre (68b), dans lequel le premier cylindre (67b) et le deuxième cylindre (68b) sont reliés l'un à l'autre au moyen d'une ouverture de raccordement (36b).

4. Agencement d'amortissement de vibrations de torsion (10) selon la revendication 3, **caractérisé en ce que** dans la première paire de cylindres (57a), le premier piston (65a) est disposé de manière coulissante dans le premier cylindre (67a) et le deuxième piston (66a) est disposé de manière coulissante dans le deuxième cylindre (68a), dans lequel les deux pistons (65a ; 66a) sont en relation active au moyen de l'agent actif (70a) et forment un premier espace de travail (72a), et dans lequel dans la deuxième paire de cylindres (57b), le premier piston (65b) est disposé de manière coulissante dans le premier cylindre (67b) et le deuxième piston (66b) est disposé de manière coulissante dans le deuxième cylindre (68b), dans lequel les deux pistons (65b ; 66b) sont en relation active au moyen de l'agent actif (70b) et forment un premier espace de travail (72b).

5. Agencement d'amortissement de vibrations de torsion (10) selon la revendication 3 ou 4, **caractérisé en ce que** le premier piston (65a) de la première paire de cylindres (57a) et le premier piston (65b) de la deuxième paire de cylindres (57b) sont reliées au premier élément d'entrée (20) de l'agencement de couplage (51), et **en ce que** le deuxième piston (66a) de la première paire de cylindres (57a) et le deuxième piston (66b) de la deuxième paire de cylindres (57b) sont reliés au deuxième élément d'entrée (30) de l'agencement de couplage (51), et dans lequel le premier et le deuxième élément de carter (64a, 64b) sont reliés à l'élément de sortie (40).

6. Agencement d'amortissement de vibrations de torsion (10) selon l'une quelconque des revendications 3 à 5, **caractérisé en ce que** dans le cas d'une variation de position relative d'un des deux pistons (65a ; 66a) de la première paire de cylindres (57a) par rapport à l'élément de carter (64a), l'autre des deux pistons (66a, 65a) change de position dans l'autre sens, et dans lequel le premier piston (65a) de la première paire de cylindres (57a) est solidaire du premier piston (65b) de la deuxième paire de cylindres (57b), et dans lequel le deuxième piston (66a) de la première paire de cylindres (57a) est solidaire du deuxième piston (66b) de la deuxième paire de cylindres (57b) .

7. Agencement d'amortissement de vibrations de torsion (10) selon l'une quelconque des revendications 2 à 6, **caractérisé en ce qu'**un diamètre d1 du premier piston (65a ; 65b) respectivement est supérieur ou égal ou inférieur à un diamètre d2 du deuxième piston (66a, 66b) respectivement.

8. Agencement d'amortissement de vibrations de torsion (10) selon l'une quelconque des revendications 3 à 7, **caractérisé en ce que** la première et la deuxième paire de cylindres (57a, 57b) présentent un tracé courbe ou un tracé droit.

9. Agencement d'amortissement de vibrations de torsion (10) selon l'une quelconque des revendications 3 à 8, **caractérisé en ce que** la première paire de cylindres (57a) et la deuxième paire de cylindres (57b) prévoient respectivement une deuxième ouverture de raccordement (37a, b), dans lequel les deuxièmes ouvertures de raccordement (37a, b) sont prévues en série par rapport aux premières ouvertures de raccordement (36a, b) respectivement, de sorte que respectivement un espace de travail (73a, b) est formé qui est respectivement rempli d'un agent actif (74a, b) de sorte que respectivement une paire de cylindres (57a, b) est réalisée à double effet.

10. Agencement d'amortissement de vibrations de torsion (10) selon l'une quelconque des revendications 2 à 9, **caractérisé en ce que** l'agent actif (70) est un milieu incompressible.

11. Agencement d'amortissement de vibrations de torsion (10) selon la revendication 10, **caractérisé en ce que** le milieu incompressible est un fluide.

12. Agencement d'amortissement de vibrations de torsion (10) selon l'une quelconque des revendications 3 à 11, **caractérisé en ce qu'**un accumulateur de pression (42a, b) est prévu respectivement sur le premier espace de travail (72a, b) de la première ou de la deuxième paire de cylindres (57a, b), et respectivement un clapet antiretour (46a, b) est prévu dans la direction active en amont de l'accumulateur de pression (42a, b).

13. Agencement d'amortissement de vibrations de torsion (10) selon l'une quelconque des revendications 9 à 12, **caractérisé en ce qu'**un accumulateur de pression (41a, b) est prévu respectivement sur le deuxième espace de travail (73a, b) de la première ou de la deuxième paire de cylindres (57a, b), et respectivement un clapet antiretour (45a, b) est prévu dans la direction active en amont de l'accumulateur de pression (41a, b).

14. Agencement d'amortissement de vibrations de torsion (10) selon l'une quelconque des revendications 3 à 11, **caractérisé en ce que** dans le premier espace de travail (72a) de la première paire de cylindres (57a) et le premier espace de travail (72b) de la deuxième paire de cylindres (57b) prévoient un accumulateur de pression (42) commun, et un clapet antiretour (46) est prévu dans la direction active en amont de l'accumulateur de pression (42).

15. Agencement d'amortissement de vibrations de torsion (10) selon l'une quelconque des revendications 9 à 12, **caractérisé en ce que** le deuxième espace de travail (73a) de la première paire de cylindres (57a) et le deuxième espace de travail (73b) de la deuxième paire de cylindres (57b) prévoient un accumulateur de pression (41) commun, et un clapet antiretour (45) est prévu dans la direction active en amont de l'accumulateur de pression (41).

16. Agencement d'amortissement de vibrations de torsion (10) selon l'une quelconque des revendications 9 à 11, **caractérisé en ce que** le premier et le deuxième espace de travail (72a, 73a) de la première paire de cylindres (57a) et le premier et le deuxième espace de travail (72b, 73b) de la deuxième paire de cylindres (57b) prévoient un accumulateur de pression (41) commun, et un clapet antiretour (45) est prévu dans la direction active en amont de l'accumulateur de pression (41) .

17. Agencement d'amortissement de vibrations de torsion (10) selon l'une quelconque des revendications 1 à 16, **caractérisé en ce que** deux ou plusieurs agencements de transmission à fluide (60) sont répartis régulièrement ou irrégulièrement autour de l'axe de rotation (A) dans la direction circonférentielle.

18. Agencement d'amortissement de vibrations de torsion (10) selon l'une quelconque des revendications 1 à 7, 8 première variante, 9 à 17, **caractérisé en ce que** la première paire de cylindres (57a) et la deuxième paire de cylindres (57b) sont prévues sur des rayons identiques ou sur des rayons différents autour de l'axe de rotation A.

19. Agencement d'amortissement de vibrations de torsion (10) pour une chaîne cinématique d'un véhicule automobile, comprenant une zone d'entrée (50) à entraîner en rotation autour d'un axe de rotation (A) et une zone de sortie (55), dans lequel entre la zone d'entrée (50) et la zone de sortie (55), en parallèle l'un à l'autre, un premier trajet de transmission de couple (47) pour la transmission d'une première partie de couple (Ma1) et un deuxième trajet de transmission de couple (48) pour la transmission d'une deuxième partie de couple (Ma2) d'un couple total (Mges) à transmettre entre la zone d'entrée (50) et la zone de sortie (55) sont prévus,
- un agencement de déphasage (44) au moins dans le premier trajet de transmission de couple (47), pour générer un déphasage des irrégularités de rotation dirigées sur le premier trajet de transmission de couple (47) par rapport à des irrégularités de rotation dirigées sur le deuxième trajet de transmission de couple (48), dans lequel l'agencement de déphasage (44) comprend un système de vibration (56) pourvu d'un élément primaire (1) et d'une masse intermédiaire (5) pouvant tourner autour de l'axe de rotation (A) contre l'effet de rappel d'un agencement d'élément amortisseur (3) par rapport à l'élément primaire (1),
- un agencement de couplage (51) pour réunir la première partie de couple (Ma1) transmise par le premier trajet de transmission de couple (47) et la deuxième partie de couple (Ma2) transmise par le deuxième trajet de transmission de couple (48), et pour retransmettre le couple réuni (Maus) à la zone de sortie (55), dans lequel l'agencement de couplage (51) comprend un premier élément d'entrée (20) relié au premier trajet de transmission de couple (47), un deuxième élément d'entrée (30) relié au deuxième trajet de transmission de couple (48) et un élément de sortie (40) relié à la zone de sortie (55), dans lequel l'agencement de couplage (51) est réalisé sous la forme d'un agencement de transmission à fluide (60) **caractérisé en ce que** l'agencement de transmission à fluide (60) comprend une première paire de cylindres (57a) et une deuxième paire de cylindres (57b), dans lequel la première paire de cylindres (57a) est configurée de l'autre côté par rapport à la deuxième paire de cylindres (57b), et dans lequel les espaces de travail (72a, 72b, 73a, 73b) de la première et de la deuxième paire de cylindres (57a, 57b) présentent respectivement un accumulateur de pression ou un accumulateur de pression commun, et dans lequel un clapet antiretour est prévu dans la direction active en amont de l'accumulateur de pression.
